# EUROPEAN PATENT APPLICATION

(11) **EP 4 769 861 A1**
(43) Date of publication of application: **01.07.2026**
(21) Application number: 25226515.2
(22) Date of filing: 22.12.2025
(51) Int. Cl.: H02J 1/102, H02J 4/25

(54) **POWER CONVERSION DEVICE, METHOD FOR DETERMINING CONNECTION STATE OF POWER CONVERSION DEVICE, COMPONENT CONTROLLER, AND SYSTEM**

(30) Priority: 31.12.2024 CN 202411999323
(71) Applicant: Sungrow (Shanghai) Co., Ltd., Shanghai 201107 (CN)
(72) Inventor: YANG, Hui, Shanghai (CN); HE, Yi, Shanghai (CN); ZHANG, Gan, Shanghai (CN); ZHANG, Lin, Shanghai (CN)
(74) Representative: Zacco Norway AS

(57) **Abstract**

A power conversion device, a method for determining a connection state of a power conversion device, a component controller, and a system are provided. The power conversion device includes: a DC input terminal and a control module. The DC input terminal is configured to be connected to a photovoltaic component through a component controller. The control module is configured to: transmit a voltage regulation instruction to the component controller; monitor an input terminal voltage of the DC input terminal connected to the component controller, where the voltage regulation instruction is used for indicating the component controller to regulate an output voltage based on the predetermined voltage change strategy; compare a measured voltage change of the input terminal voltage with a predetermined voltage change strategy; and determine a connection state between the DC input terminal and the component controller based on a comparison result. Therefore, it can be determined conveniently whether the DC side of the power conversion device and the component controller are open circuited.

## Description

### FIELD

The present disclosure relates to the technical field of photovoltaic power generation, and in particular to a power conversion device, a method for determining a connection state of a power conversion device, a component controller, and a system.

### BACKGROUND

In a renewable energy power generation system (such as a photovoltaic power generation system), a direct-current power source (such as a photovoltaic component) may be connected to a power conversion device through a component controller. In response to that the connection between the component controller and the power conversion device fails, for example, in response to that the connection between the component controller and the power conversion device is in an open-circuit state, the photovoltaic component connected to the component controller cannot participate in the power generation process, resulting in a decrease in the power generation efficiency of the photovoltaic power generation system.

Therefore, it is important to effectively monitor a connection state between the component controller and the power conversion device and timely detect and process a situation in which the connection state is an open-circuit state, thereby ensuring the stable operation of the photovoltaic power generation system.

### SUMMARY

According to the embodiments in the present disclosure, a power conversion device, and a method for determining a connection state of a power conversion device are provided, to determine a connection state between the power conversion device and the component controller in a case that the power conversion device is connected to a photovoltaic component through the component controller.

According to the present disclosure, a power conversion device is provided. The power conversion device includes: a direct-current (DC) input terminal and a control module. The DC input terminal is configured to be connected to a photovoltaic component through a component controller. The control module is configured to transmit a voltage regulation instruction to the component controller, monitor an input terminal voltage of the DC input terminal connected to the component controller, compare a measured voltage change of the input terminal voltage with a predetermined voltage change strategy, and determine a connection state between the DC input terminal and the component controller based on a comparison result. The voltage regulation instruction is used for indicating the component controller to regulate an output voltage based on the predetermined voltage change strategy.

According to the present disclosure, a method for determining a connection state of a power conversion device is provided. The power conversion device includes a direct-current (DC) input terminal, and the DC input terminal is connected to a photovoltaic component through a component controller. The method includes: transmitting a voltage regulation instruction to the component controller, and monitoring an input terminal voltage of the DC input terminal connected to the component controller, where the voltage regulation instruction is used for indicating the component controller to regulate an output voltage based on a predetermined voltage change strategy; comparing a measured voltage change of the input terminal voltage with the predetermined voltage change strategy; and determining the connection state between the DC input terminal and the component controller based on a comparison result of the measured voltage change and the predetermined voltage change strategy.

According to the present disclosure, a power conversion device is provided. The power conversion device includes: a direct-current (DC) input terminal and a control module. The DC input terminal is configured to be connected to a photovoltaic component through a component controller. The control module is configured to regulate an electrical parameter of the DC input terminal, and determine a connection state between the DC input terminal and the component controller based on a change of a component output current of a component output terminal of the component controller and/or a change of a component output voltage of the component output terminal of the component controller after the electrical parameter of the DC input terminal is regulated.

In the embodiments of the present disclosure, the power conversion device includes a direct-current (DC) input terminal and a control module. The DC input terminal is configured to be connected to a photovoltaic component through a component controller. The control module is configured to transmit a voltage regulation instruction to the component controller, and monitor an input terminal voltage of the DC input terminal connected to the component controller. The voltage regulation instruction is used for indicating the component controller to regulate an output voltage based on a predetermined voltage change strategy, a measured voltage change of the input terminal voltage is compared with the predetermined voltage change strategy, and a connection state between the DC input terminal and the component controller is determined based on a comparison result. For example, in a case that the measured voltage change of the input terminal voltage matches the predetermined voltage change strategy, it may be determined that the connections state between the DC input terminal and at least a part of component controllers are in a normal connected state; and in a case that the measured voltage change of the input terminal voltage does not match the predetermined voltage change strategy, it may be determined that the connection state between the DC input terminal and the component controller is in an open-circuit state. Therefore, for the case that the power conversion device is connected to a photovoltaic component through the component controller, a technical effect of conveniently determining a connection state between the power conversion device and the component controller can be achieved with the solutions according to the embodiments of the present disclosure.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative effort.
FIG. 1 is a schematic diagram of a photovoltaic string according to an embodiment of the present disclosure;
FIG. 2a is a schematic diagram of a connection relationship between DC input terminals and photovoltaic units according to an embodiment of the present disclosure;
FIG. 2b is a schematic diagram of a connection relationship between a DC input terminal and a photovoltaic unit according to an embodiment of the present disclosure;
FIG. 2c is a schematic diagram of a connection relationship between a DC input terminal and photovoltaic units according to an embodiment of the present disclosure;
FIG. 2d is a schematic diagram of a connection relationship between a DC input terminal and photovoltaic units according to an embodiment of the present disclosure;
FIG. 3 is a schematic diagram of a connection relationship between DC input terminals and photovoltaic units according to an embodiment of the present disclosure;
FIG. 4 is a schematic diagram of a connection relationship between a power conversion device and photovoltaic units according to an embodiment of the present disclosure;
FIG. 5a is a schematic diagram of component controllers and a DC input terminal that are open circuited according to an embodiment of the present disclosure;
FIG. 5b is a schematic diagram of component controllers and a DC input terminal that are open circuited according to an embodiment of the present disclosure;
FIG. 6 is a schematic diagram of controlling component output voltages of component controllers to be increased step-by-step according to an embodiment of the present disclosure;
FIG. 7 is a schematic diagram showing a voltage and a current of a DC input terminal controlled by performing short-circuit scanning according to an embodiment of the present disclosure; and
FIG. 8 is a schematic diagram showing a voltage and a current after controlling a DC input terminal by performing IV scanning according to an embodiment of the present disclosure.

### DETAILED DESCRIPTION

Hereinafter, technical solutions in the present disclosure are described clearly and completely in conjunction with the drawings in the present disclosure. Apparently, the embodiments described below are only some embodiments, rather than all the embodiments of the present disclosure.

In the descriptions of the present disclosure, it should be understood that terms "first" and "second" are used for descriptive purposes only and should not be understood as indicating or implying relative importance or implicitly indicating quantities of indicated technical features. Therefore, a feature defined with "first" or "second" may explicitly or implicitly include one or more such feature. In the descriptions of this specification, "plurality (multiple)" means two or more, unless otherwise expressly and specifically limited.

A power conversion device is provided according to an embodiment of the present disclosure. The power conversion device includes: a direct-current (DC) input terminal and a control module. The DC input terminal is configured to be connected to a DC source (such as a photovoltaic component) through a component controller. The control module is configured to: transmit a voltage regulation instruction to the component controller, and monitor an input terminal voltage of the DC input terminal connected to the component controller. The voltage regulation instruction is used for indicating the component controller to regulate an output voltage based on a predetermined voltage change strategy. The control module is further configured to compare a measured voltage change of the input terminal voltage with the predetermined voltage change strategy, and determine a connection state between the DC input terminal and the component controller based on a comparison result.

In the embodiment, the power conversion device is a device for converting a form of electrical energy. In an implementation, the power conversion device may be an inverter for performing conversion between a direct-current power and an alternating-current power. Apparently, the power conversion device may be a DC-DC converter for performing conversion between a DC power and a DC power. For example, the DC-DC converter may boost or buck a DC power. In some embodiments, the power conversion device may be an inverter, a converter, a rectifier, a combiner box, or the like, which is not limited herein.

In the embodiment, the DC input terminal serves as a connection interface at a DC side of the power conversion device. The DC input terminal is configured to connect to the photovoltaic component through the component controller, so that a DC power generated by the photovoltaic component flows through the component controller to the DC input terminal and then flows to the power conversion device in operation.

In the embodiment, the component controller is device for regulating and monitoring an output of the photovoltaic component. In an embodiment, the component controller may be a power optimizer or a shutdown device, which is not limited herein.

In some embodiments, a component controller may be connected to one or more photovoltaic components. A component controller and the photovoltaic components connected to the component controller form a photovoltaic module. An output terminal of the component controller may serve as an output terminal of the photovoltaic modules.

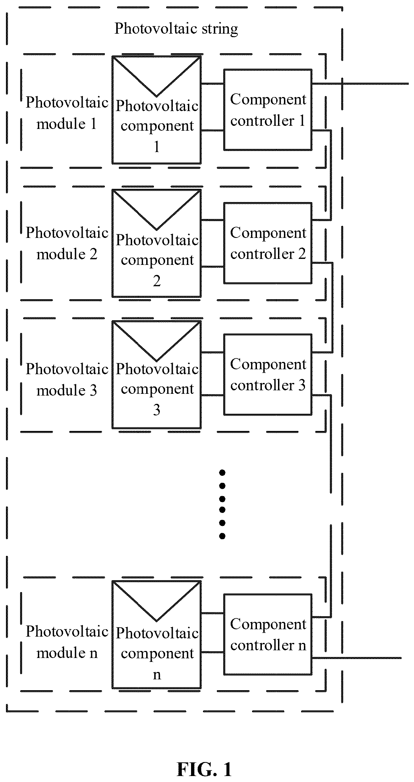

In some embodiments, as shown in FIG. 1, in a case that multiple photovoltaic modules are connected in series through output terminals of the multiple photovoltaic modules, the photovoltaic modules connected in series form a photovoltaic string. In FIG. 1, a photovoltaic module 1, a photovoltaic module 2, a photovoltaic module 3, ..., and a photovoltaic module n are connected in series to form a photovoltaic string.

In some embodiments, a photovoltaic unit includes a photovoltaic module or a photovoltaic string. For example, a photovoltaic module or a photovoltaic string may serve as a photovoltaic unit. The DC input terminal of the power conversion device may be configured to be connected to a photovoltaic unit. The DC input terminal may serve as a first DC input terminal.

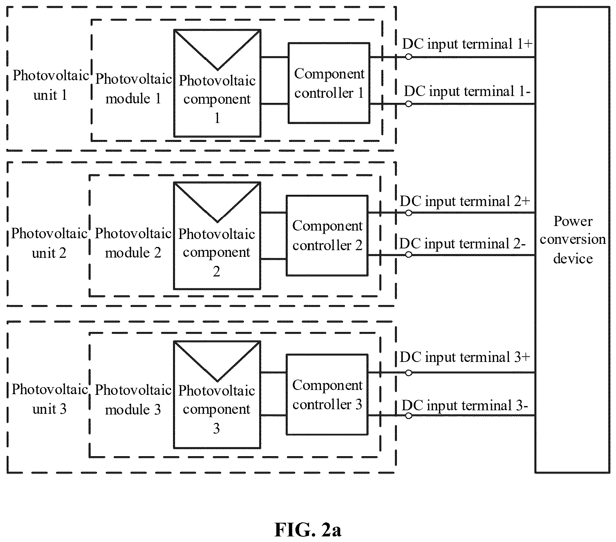

For example, as shown in FIG. 2a, the power conversion device is arranged with three DC input terminals: a DC input terminal 1, a DC input terminal 2, and a DC input terminal 3. DC input terminal 1+ represents a positive electrode of the DC input terminal 1, and DC input terminal 1- represents a negative electrode of the DC input terminal 1. DC input terminal 2+ represents a positive electrode of the DC input terminal 2, and DC input terminal 2- represents a negative electrode of the DC input terminal 2. DC input terminal 3+ represents a positive electrode of the DC input terminal 3, and DC input terminal 3- represents a negative electrode of the DC input terminal 3. The DC input terminal 1 is connected to a photovoltaic unit 1 which is formed by a photovoltaic module 1. The DC input terminal 2 is connected to a photovoltaic unit 2 which is formed by a photovoltaic module 2. The DC input terminal 3 is connected to a photovoltaic unit 3 which is formed by a photovoltaic module 3.

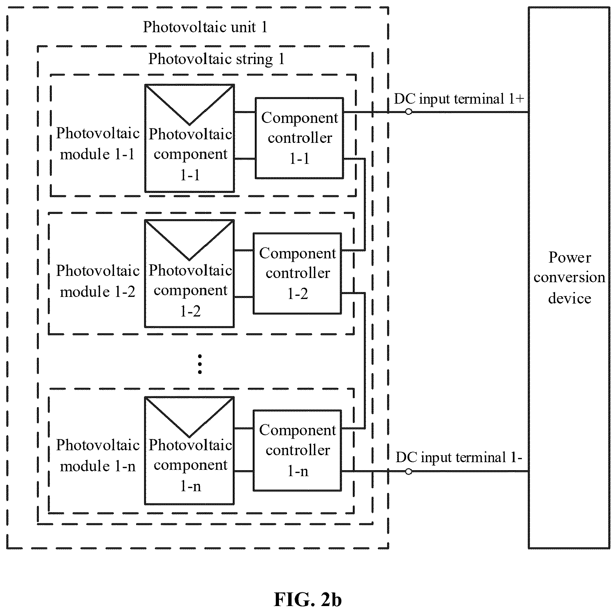

Alternatively, as shown in FIG. 2b, the power conversion device is arranged with one DC input terminal, that is, a DC input terminal 1. The DC input terminal 1 is connected to a photovoltaic unit, that is, a photovoltaic unit 1. The photovoltaic unit 1 is formed by a photovoltaic string 1. The photovoltaic string 1 is formed by a photovoltaic module 1-1, a photovoltaic module 1-2, ..., and a photovoltaic module 1-n that are connected in series.

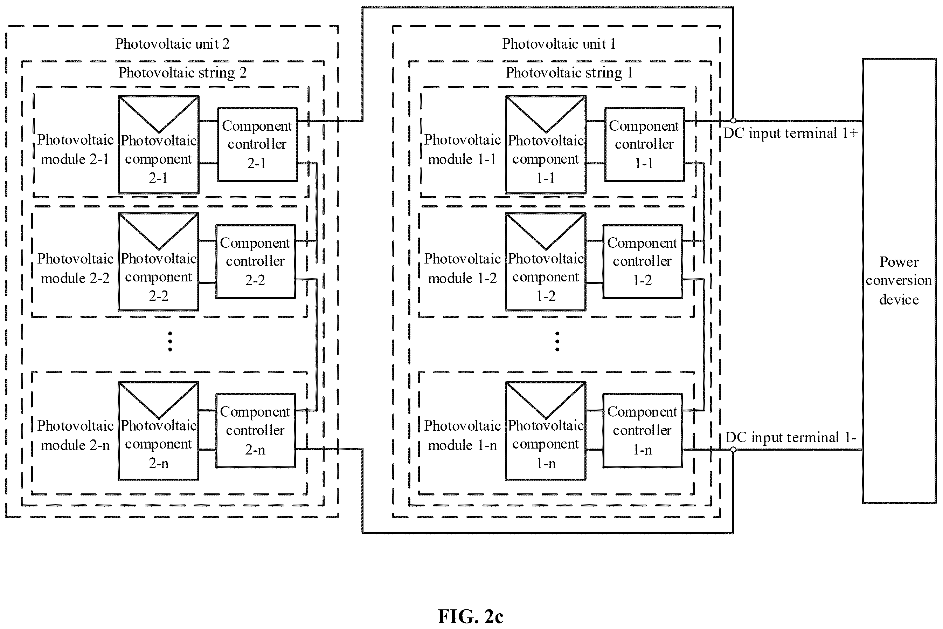

In some embodiments, a DC input terminal of the power conversion device may be configured to be connected to multiple photovoltaic units. For example, as shown in FIG. 2c, the power conversion device is arranged with one DC input terminal, that is, a DC input terminal 1. The DC input terminal 1 is connected to two photovoltaic units which are connected in parallel, that is, a photovoltaic unit 1 and a photovoltaic unit 2. The photovoltaic unit 1 is formed by a photovoltaic string 1. The photovoltaic string 1 is formed by a photovoltaic module 1-1, a photovoltaic module 1-2, ..., and a photovoltaic module 1-n that are connected in series. The photovoltaic unit 2 is formed by a photovoltaic string 2. The photovoltaic string 2 is formed by a photovoltaic module 2-1, a photovoltaic module 2-2, ..., and a photovoltaic module 2-n that are connected in series. The DC input terminal 1 may serve as a second DC input terminal.

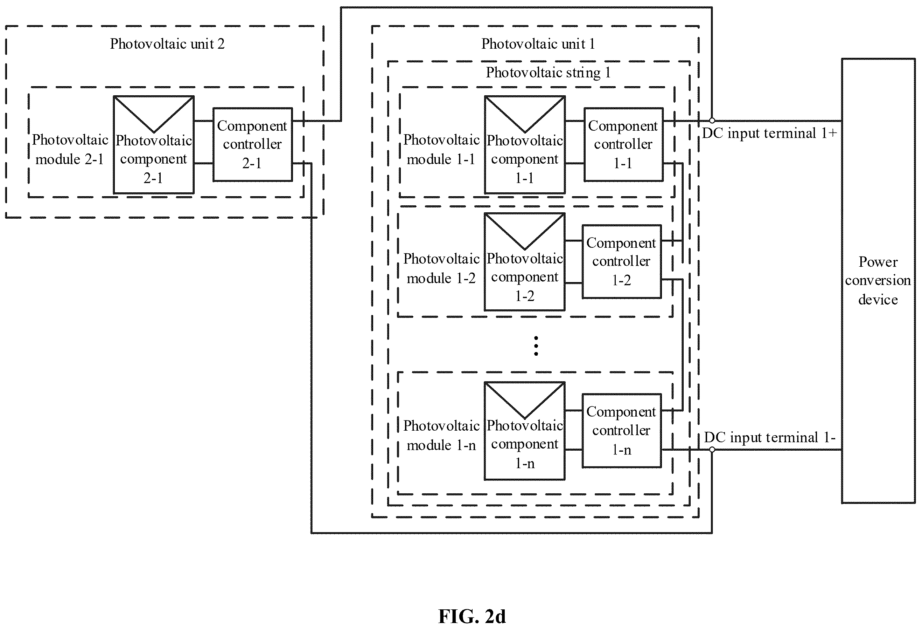

Alternatively, as shown in FIG. 2d, the power conversion device is arranged with one DC input terminal, that is, a DC input terminal 1. The DC input terminal 1 is connected to two photovoltaic units connected in parallel, that is, a photovoltaic unit 1 and a photovoltaic unit 2. The photovoltaic unit 1 is formed by a photovoltaic string 1. The photovoltaic unit 2 is formed by a photovoltaic module 2-1. The DC input terminal 1 may serve as a second DC input terminal.

In some embodiments, multiple DC input terminals may be arranged. The multiple DC input terminals are configured to be connected to different photovoltaic components through different component controllers. For example, each of the DC input terminals may be connected to a photovoltaic string. Different DC input terminals are connected to different photovoltaic strings.

In some embodiments, a DC input terminal is connected to a DC bus of the power conversion device through a DC-DC conversion circuit. The DC-DC conversion circuit may perform conversion between different forms of DC powers. For example, the DC-DC conversion circuit may be a boost circuit, and the DC-DC conversion circuit may be a buck circuit, which is not limited herein.

In some embodiments, in a case that multiple DC input terminals are arranged, different DC input terminals may be connected to the DC bus through different DC-DC conversion circuits.

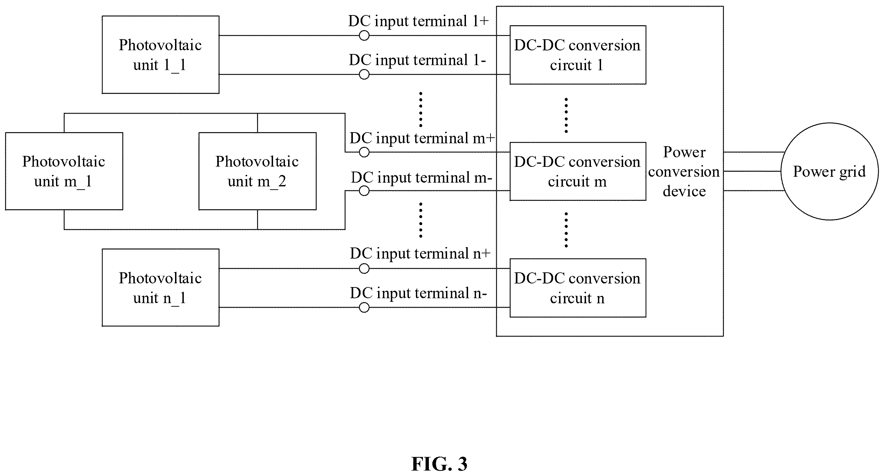

As shown in FIG. 3, the power conversion device is arranged with n DC input terminals. DC input terminal m+ represents a positive electrode of a DC input terminal m, and a DC input terminal m- represents a negative electrode of the DC input terminal m. DC input terminal n+ represents a positive electrode of a DC input terminal n, and a DC input terminal n- represents a negative electrode of the DC input terminal n.

The n DC input terminals are respectively connected to DC-DC conversion circuits in the power conversion device. A DC input terminal 1 is connected to a DC-DC conversion circuit 1. A DC input terminal m is connected to a DC-DC conversion circuit m. A DC input terminal n is connected to a DC-DC conversion circuit n. The DC input terminal 1 is configured to be connected to a photovoltaic unit 1_1. The DC input terminal m is configured to be connected to a photovoltaic unit m_1 and a photovoltaic unit m_2. The DC input terminal n is configured to be connected to a photovoltaic unit n_1.

In the embodiment, an AC side of the power conversion device is configured to be connected to a power grid.

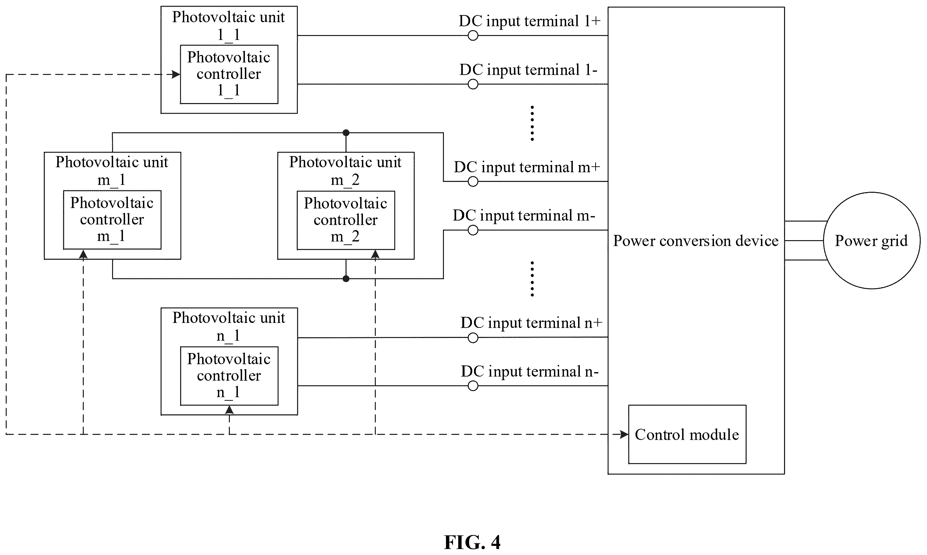

In the embodiment, the control module is configured to transmit an instruction to the component controller, and control and monitor an operation state of the power conversion device. For example, the control module may transmit a voltage regulation instruction to the component controller. The control module may further obtain an input terminal voltage of the DC input terminal in real time. As shown in FIG. 4, a photovoltaic unit includes a component controller. The control module may communicate with the component controller of the photovoltaic unit to transmit a voltage regulation instruction to the component controller.

In some embodiments, the control module may further obtain, from the component controller, voltage data or current data of a component output terminal of the component controller.

In the embodiment, the voltage regulation instruction is used for indicating the component controller to regulate an output voltage of the component controller. With the voltage regulation instruction, the component controller may be indicated to regulate an output voltage of the component controller based on a predetermined voltage change strategy.

In the embodiment, the predetermined voltage change strategy indicates a predetermined voltage changing pattern, so that the component controller is indicated with the predetermined voltage change strategy how to regulate the output voltage of the component controller. For example, the predetermined voltage change strategy may be a predetermined voltage changing curve. Thus, the voltage regulation instruction may indicate the component controller to regulate the output voltage of the component controller based on the predetermined voltage changing curve.

In the embodiment, the input terminal voltage is a voltage actually measured at the DC input terminal. A measured voltage change of the input terminal voltage indicates a change of the input terminal voltage in a time period. The time period may be a time period after the control module transmits the voltage regulation instruction to the component controller. For example, the time period may be a time period of 1 second, 3 seconds, 5 seconds or the like after the control module transmits the voltage regulation instruction to the component controller. The time period may include a time period before the control module transmits the voltage regulation instruction to the component controller. For example, the time period may be a period of 0.5 second, 2 seconds, 4 seconds or the like before the control module transmits the voltage regulation instruction to the component controller. The time period is not limited herein.

In the embodiment, the control module may obtain the input terminal voltage with a voltage detection device arranged at the DC input terminal, or may monitor the input terminal voltage of the DC input terminal with other technical means, which is not limited herein.

In the embodiment, the measured voltage change is compared with the predetermined voltage change strategy, which is a process of analyzing the measured voltage change and the predetermined voltage change strategy. Based on a comparison result, a connection state between the DC input terminal and the component controller may be determined. For example, in a case that the input terminal voltage does not change with a predetermined voltage change trend, that is, the measured voltage change of the input terminal voltage does not match the predetermined voltage change strategy, it may be determined that the connection state between the DC input terminal and the component controller is an open-circuit state; and in a case that the input terminal voltage changes with the predetermined voltage change strategy, that is, the measured voltage change of the input terminal voltage matches the predetermined voltage change strategy, it may be determined that the connection state between the DC input terminal and at least a part of component controllers is a normal connected state. Thus, a technical effect of conveniently determining a connection state between the power conversion device and the component controller can be achieved.

In some embodiments, the connection state between the DC input terminal and the component controller is determined based on the comparison result by: determining that the connection state between the DC input terminal and the component controller is an open-circuit state in a case that the measured voltage change of the input terminal voltage of the DC input terminal does not match the predetermined voltage change strategy.

In the embodiment, in the case that the measured voltage change of the input terminal voltage of the DC input terminal does not match the predetermined voltage change strategy, it indicates that the DC input terminal cannot receive DC power from the photovoltaic component through the component controller, and thus the input terminal voltage does not changes with the component output voltage of the component controller. Therefore, it is determined that the connection state between the DC input terminal and the component controller is an open-circuit state. The open-circuit state indicates that no effective current path is formed between the DC input terminal and the component controller.

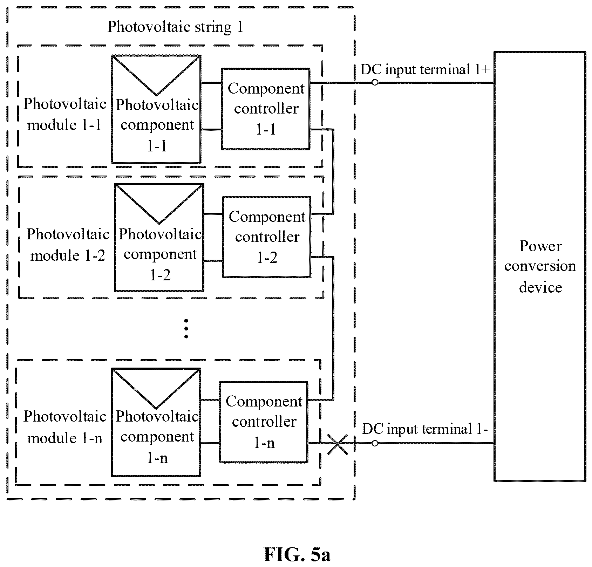

In some embodiments, in a case that the DC input terminal is configured to be connected to a photovoltaic string, the open-circuit state includes a state in which the component controller that is in the photovoltaic string and is configured to be directly connected to the DC input terminal is open circuited with the DC input terminal. For example, referring to FIG. 5a, a negative electrode 1- of a DC input terminal 1 is configured to be directly connected to a component controller 1-n, and the open-circuit state includes a state in which the negative electrode 1- of the DC input terminal 1 and the component controller 1-n are open circuited.

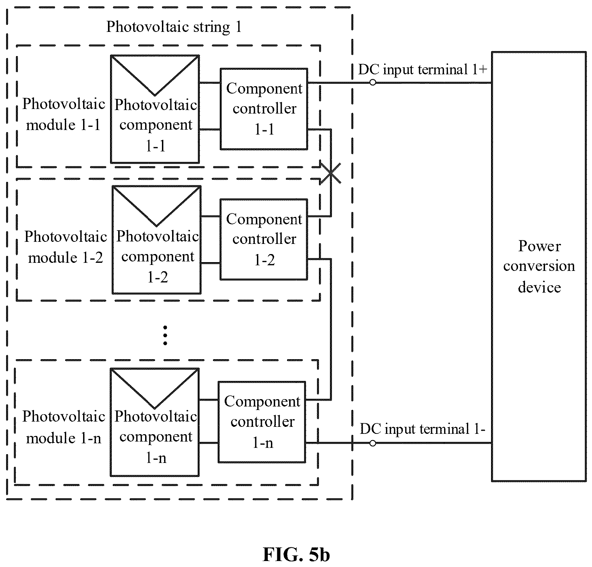

In some embodiments, the open circuit state further includes a state in which two component controllers connected in series in a photovoltaic string are open circuited. For example, referring to FIG. 5b, a component controller 1-1 and a component controller 1-2 are open circuited. Thus, the DC power of the photovoltaic component cannot be provided to the DC input terminal 1 through the component controllers.

In some embodiments, a component controller that is in a photovoltaic string and is configured to be directly connected to a DC input terminal may be open circuited with the DC input terminal, and two component controllers connected in series in the photovoltaic string may be open circuited, which is not limited herein.

In some embodiments, the DC input terminal includes a first DC input terminal for connecting to a photovoltaic unit. The connection state between the DC input terminal and the component controller is determined based on the comparison result by: determining that a connection state between the first DC input terminal and a component controller in the photovoltaic unit connected to the first DC input terminal is a normal connected state in a case that a measured voltage change of an input terminal voltage of the first DC input terminal matches the predetermined voltage change strategy.

In the embodiment, the first DC input terminal is a DC input terminal for connecting to a photovoltaic unit. The first DC input terminal may be connected to a photovoltaic module or a photovoltaic string.

In the embodiment, in the case that the measured voltage change of the input terminal voltage of the DC input terminal matches the predetermined voltage change strategy, it indicates that the DC input terminal can receive DC power from the photovoltaic component through the component controller, and thus the input terminal voltage may change with the component output voltage of the component controller.

The first DC input terminal is connected to a photovoltaic unit, and the photovoltaic unit is a photovoltaic string or a photovoltaic module. In a case that one or more component controllers in the photovoltaic unit and the DC input terminal are open circuited, the measured voltage change of the input terminal voltage does not changes with the predetermined voltage change strategy. Therefore, in the case that the measured voltage change of the input terminal voltage of the DC input terminal matches the predetermined voltage change strategy, it may be determined that the connection state of the DC input terminal and the component controller in the photovoltaic unit is a normal connected state. The normal connected state indicates that an effective current path is formed between the DC input terminal and the component controller.

In some embodiments, the DC input terminal includes a second DC input terminal for connecting to multiple photovoltaic units connected in parallel. The connection state between the DC input terminal and the component controller is determined based on the comparison result by: connecting the power conversion device to a power grid and detecting an DC input current of the second DC input terminal in a case that a measured voltage change of an input terminal voltage of the second DC input terminal matches the predetermined voltage change strategy; determining that each of connection states between the second DC input terminal and component controllers in the multiple photovoltaic units connected to the second DC input terminal is a normal connected state in a case that the DC input current is greater than a predetermined threshold; and determining that each of connection states between the second DC input terminal and component controllers in a part of the multiple photovoltaic units connected to the second DC input terminal is an open-circuit state in a case that the DC input current is less than the predetermined threshold.

In the embodiment, the second DC input terminal is a DC input terminal for connecting to the multiple photovoltaic units connected in parallel. The second DC input terminal may be connected to multiple photovoltaic modules connected in parallel, multiple photovoltaic strings connected in parallel, or a photovoltaic module and a photovoltaic string connected in parallel, which is not limited herein.

Since the second DC input terminal is connected to multiple photovoltaic units connected in parallel, in a case that component controllers in a part of the multiple photovoltaic units and the second DC input terminal are open circuited, the electric power of the photovoltaic components in the other part of the multiple photovoltaic units may be transmitted to the second DC input terminal through corresponding component controllers, so that the input voltage of the second DC input terminal may still change with the component output voltage of the component controllers. Therefore, in the case that the measured voltage change of the input terminal voltage of the second DC input terminal matches the predetermined voltage change strategy, it is required to perform determination based on a current flowing to the second DC input terminal after the power conversion device is connected to the power grid, so as to accurately determine whether the second DC input terminal and the component controllers in the photovoltaic unit connected to the second DC input terminal are open circuited.

In the embodiment, after the power conversion device is connected to the power grid, in a case that the DC input current flowing to the second DC input terminal is greater than a predetermined threshold, it may be determined that the electric powers of the photovoltaic units connected in parallel, that are connected to the second DC input terminal, are all transmitted to the second DC input terminal. Therefore, it may be determined that each of the connection states between the second DC input terminal and the component controllers in the multiple photovoltaic units connected to the second DC input terminal is a normal connected state.

In the embodiment, after the power conversion device is connected to the power grid, in a case that the DC input current flowing to the second DC input terminal is less than the predetermined threshold, it may be determined that only electric powers of a part of the photovoltaic units connected in parallel are transmitted to the second DC input terminal. Therefore, it may be determined that each of the connection states between the second DC input terminal and the component controllers in a part of the multiple photovoltaic units connected to the second DC input terminal is an open-circuit state.

In the embodiment, the predetermined threshold may be a predetermined current threshold. In some embodiments, the predetermined threshold may be set based on the number of the photovoltaic units connected in parallel, the number of the photovoltaic modules in the photovoltaic units connected in parallel or the number of the photovoltaic components in the photovoltaic units connected in parallel for the second DC input terminal, which is not limited herein.

In some cases, the predetermined voltage change strategy is simple, for example, the predetermined voltage change strategy indicates to perform regulation from a first voltage value to a second voltage value, thus it may be difficult to perform determination due to disturbance effects. Therefore, to accurately determine whether the measured voltage change of the input terminal voltage matches the predetermined voltage change strategy, the predetermined voltage change strategy indicates increasing a component output voltage of the component controller step-by-step in some embodiments.

The increasing a component output voltage of the component controller step-by-step indicates increasing the component output voltage of the component controller multiple times at predetermined time intervals. The predetermined time intervals at which the component output voltage of the component controller is increased may be similar or different, which is not limited herein.

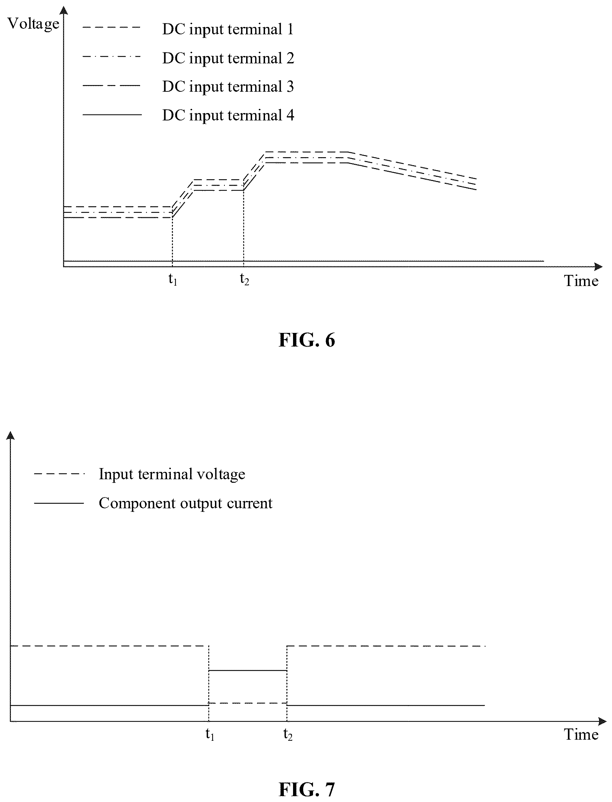

Reference is made to FIG. 6, which shows changes of input terminal voltages detected at DC input terminals after a voltage regulation instruction is transmitted to the component controller to increase the component output voltage step-by-step. The voltage regulation instruction indicates the component controller to increase the voltage at time instants t₁ and t₂. A DC input terminal 1 is configured to be connected to a photovoltaic unit 1, a DC input terminal 2 is configured to be connected to a photovoltaic unit 2, a DC input terminal 3 is configured to be connected to a photovoltaic unit 3, and a DC input terminal 4 is configured to be connected to a photovoltaic unit 4. Input terminal voltages of the DC input terminal 1, the DC input terminal 2 and the DC input terminal 3 are increased step-by-step in response to the component controller increasing the component output voltage step-by-step. The voltage of the DC input terminal 4 does not change, which indicates that the DC input terminal 4 and the component controller of the photovoltaic unit 4 are open circuited.

In some embodiments, in a case that the predetermined voltage change strategy indicates increasing a component output voltage of the component controller step-by-step, the voltage regulation instruction is used for indicating the component controller to operate based on multiple predetermined sequentially-increasing duty cycles to increase the component output voltage of the component controller step-by-step.

In an embodiment, the component controller may include a boost circuit. The boost circuit may boost the component input voltage of the component controller to be equal to the component output voltage. Multiple power switches are arranged in the boost circuit. A control unit of the component controller may control a ratio of a turning-off time period and a turning-on time period of a power switch based on the predetermined duty cycles, so that the component input voltage of the component controller is boosted or bucked to a predetermined target component output voltage. Thus, the voltage regulation instruction is used for indicating the component controller to operate based on multiple predetermined sequentially-increasing duty cycles to increase the component output voltage of the component controller step-by-step.

The multiple predetermined sequentially-increasing duty cycles may be preset in a memory of the control unit of the component controller. The voltage regulation instruction is used for indicating the component controller to obtain the multiple predetermined sequentially-increasing duty cycles from the memory and operate. Apparently, the multiple predetermined sequentially-increasing duty cycles may be carried in the voltage regulation instruction, and are transmitted to the component controller by the control module of the power conversion device in transmitting the voltage regulation instruction, which is not limited herein.

In some embodiments, the control module of the power conversion device may configure multiple predetermined duty cycles in a voltage regulation instruction. Alternatively, the control module of the power conversion device may configure only one predetermined duty cycle in the voltage regulation instruction, and transmits voltage regulation instructions multiple times to increase the component output voltage of the component controller step-by-step.

In some cases, the control module transmitting the voltage regulation instruction to the component controller may cause the component output voltage of the component controller to exceed a safe output voltage of the component controller, resulting in an increased risk of damaging the component controller.

Therefore, in some embodiments, the control module is further configured to, before transmitting the voltage regulation instruction to the component controller, transmit a voltage limiting instruction to the component controller. The voltage limiting instruction is used for controlling the component output voltage of the component controller to be less than or equal to a safe output voltage.

The voltage limiting instruction is used for indicating an upper limit of the component output voltage of the component controller. In an embodiment, with the voltage limiting instruction, the component controller reduce the component output voltage or prevent the component output voltage from being increased in response to the component output voltage approaches or exceeds the safe output voltage, thereby reducing the risk of damaging the components in the component controller. For example, the voltage limiting instruction may indicate that an upper limit of the component output voltage is 250V, then the component controller may automatically regulate the duty cycle or perform other operations to reduce the component output voltage in response to an actual component output voltage approaches or reaches 250V.

In some embodiments, multiple DC input terminals are arranged, and the multiple DC input terminals are configured to be connected to different photovoltaic components through different component controllers. The voltage regulation instruction is transmitted to the component controller and the input terminal voltage of the DC input terminal connected to the component controller is monitored by: transmitting the voltage regulation instruction to at least a part of the multiple component controllers, where the part of the multiple component controllers to which the voltage regulation instruction is transmitted serve as target component controllers; and monitoring input terminal voltages of DC input terminals connected to the target component controllers. The measured voltage change of the input terminal voltage is compared with the predetermined voltage change strategy and the connection state between the DC input terminal and the component controller is determined based on the comparison result by: comparing measured voltage changes of the DC input terminals connected to the target component controllers with the predetermined voltage change strategy, and determining connection states between the target component controllers and the DC input terminals connected to the target component controllers based on a comparison result.

In the embodiment, different DC input terminals are connected to different photovoltaic components through different component controllers, performing electric energy transmission.

In the embodiment, the target component controllers are the component controllers to which the voltage regulation instruction is transmitted.

In some embodiments, the target component controllers may be all the component controllers. Alternatively, the target component controllers may be all component controllers connected to a DC input terminal, and are configured to determine connection states between the DC input terminal and the target component controllers based on the measured voltage changes of the DC input voltages of the DC input terminals after the voltage regulation instruction is transmitted to the component controllers.

For comparing a measured voltage change of a DC input terminal connected to a target component controller with the predetermined voltage change strategy and determining a connection state between the target component controller and the DC input terminal connected to the target component controller based on a comparison result, one may refer to other embodiments of the present disclosure, which is not repeated herein.

A method for determining a connection state of a power conversion device is further provided according to the present disclosure. The power conversion device includes a DC input terminal. The DC input terminal is connected to a photovoltaic component through a component controller. The method includes: transmitting a voltage regulation instruction to the component controller, and monitoring an input terminal voltage of the DC input terminal connected to the component controller, where the voltage regulation instruction is used for indicating the component controller to regulate an output voltage based on a predetermined voltage change strategy; comparing a measured voltage change of the input terminal voltage with the predetermined voltage change strategy; and determining the connection state between the DC input terminal and the component controller based on a comparison result of the measured voltage change and the predetermined voltage change strategy.

In some embodiments, the determining the connection state between the DC input terminal and the component controller based on a comparison result includes: determining that the connection state between the DC input terminal and the component controller is an open-circuit state in a case that the measured voltage change of the input terminal voltage of the DC input terminal does not match the predetermined voltage change strategy.

In some embodiments, the component controller and the photovoltaic component connected to the component controller form a photovoltaic module. Multiple photovoltaic modules connected in series form a photovoltaic string. In a case that the DC input terminal is connected to the photovoltaic string, the open-circuit state includes a state in which the component controller that is in the photovoltaic string and is directly connected to the DC input terminal is open circuited with the DC input terminal, and/or a state in which two component controllers connected in series in the photovoltaic string are open circuited.

In some embodiments, a component controller and a photovoltaic component connected to the component controller form a photovoltaic module. Multiple photovoltaic modules connected in series form a photovoltaic string. The DC input terminal includes a first DC input terminal for connecting to a photovoltaic unit. The photovoltaic unit includes a photovoltaic module or a photovoltaic string. The determining the connection state between the DC input terminal and the component controller based on a comparison result includes: determining that a connection state between the first DC input terminal and a component controller in the photovoltaic unit connected to the first DC input terminal is a normal connected state in a case that a measured voltage change of an input terminal voltage of the first DC input terminal matches the predetermined voltage change strategy.

In some embodiments, a component controller and a photovoltaic component connected to the component controller form a photovoltaic module. Multiple photovoltaic modules connected in series form a photovoltaic string. The DC input terminal includes a second DC input terminal for connecting to multiple photovoltaic units connected in parallel. Each of the multiple photovoltaic units includes a photovoltaic module or a photovoltaic string. The determining the connection state between the DC input terminal and the component controller based on a comparison result includes: connecting the power conversion device to a power grid and detecting an DC input current of the second DC input terminal in a case that a measured voltage change of an input terminal voltage of the second DC input terminal matches the predetermined voltage change strategy; determining that each of connection states between the second DC input terminal and component controllers in the multiple photovoltaic units connected to the second DC input terminal is a normal connected state in a case that the DC input current is greater than a predetermined threshold; and determining that each of connection states between the second DC input terminal and component controllers in a part of the multiple photovoltaic units connected to the second DC input terminal is an open-circuit state in a case that the DC input current is less than the predetermined threshold.

In some embodiments, the predetermined voltage change strategy indicates increasing a component output voltage of the component controller step-by-step.

In some embodiments, the voltage regulation instruction is used for indicating the component controller to operate based on multiple predetermined sequentially-increasing duty cycles to increase the component output voltage of the component controller step-by-step.

In some embodiments, the method for determining a connection state of a power conversion device further includes: transmitting a voltage limiting instruction to the component controller before transmitting the voltage regulation instruction to the component controller. The voltage limiting instruction is used for controlling a component output voltage of the component controller to be less than or equal to a safe output voltage.

In some embodiments, multiple DC input terminals are arranged, and the multiple DC input terminals are connected to different photovoltaic components through different component controllers. The transmitting a voltage regulation instruction to the component controller and monitoring an input terminal voltage of the DC input terminal connected to the component controller includes: transmitting the voltage regulation instruction to at least a part of the multiple component controllers, where the part of the multiple component controllers to which the voltage regulation instruction is transmitted serve as target component controllers; and monitoring input terminal voltages of DC input terminals connected to the target component controllers. The comparing a measured voltage change of the input terminal voltage with the predetermined voltage change strategy and determining the connection state between the DC input terminal and the component controller based on a comparison result includes: comparing measured voltage changes of the DC input terminals connected to the target component controllers with the predetermined voltage change strategy, and determining connection states between the target component controllers and the DC input terminals connected to the target component controllers based on a comparison result.

For the descriptions of the method for determining a connection state of a power conversion device, one may refer to other embodiments in the present disclosure, which is not repeated herein.

A power conversion device is provided according to the present disclosure. The power conversion device includes a DC input terminal and a control module. The DC input terminal is configured to be connected to a photovoltaic component through a component controller. The control module is configured to regulate an electrical parameter of the DC input terminal, and determine a connection state between the DC input terminal and the component controller based on a change of a component output current of a component output terminal of the component controller and/or a change of a component output voltage of the component output terminal of the component controller after the electrical parameter of the DC input terminal is regulated.

In the embodiment, the electrical parameter may be an input terminal voltage of the DC input terminal, an input terminal current flowing to the DC input terminal, a load of the DC input terminal, or the like, which is not limited herein.

In the embodiment, the change of the current of the component output terminal of the component controller indicates the change of the component output current over time at the component output terminal. The change of the voltage of the component output terminal of the component controller indicates the change of the component output voltage over time at the component output terminal.

After the power conversion device regulate an electrical parameter of the DC input terminal, in a case that the component output voltage of the component output terminal of the component controller changes with the regulated electrical parameter of the DC input terminal or the component output current of the component output terminal of the component controller changes with the regulated electrical parameter of the DC input terminal, it indicates that the regulated electrical parameter of the DC input terminal affects the electrical parameter of the component output terminal of the component controller, and thereby it may be determined that the connection state between the DC input terminal and the component controller is a normal connected state.

After the power conversion device regulate an electrical parameter of the DC input terminal, in a case that the component output voltage of the component output terminal of the component controller does not change with the regulated electrical parameter of the DC input terminal or the component output current of the component output terminal of the component controller does not change with the regulated electrical parameter of the DC input terminal, it indicates that the regulated electrical parameter of the DC input terminal does not affect the electrical parameter of the component output terminal of the component controller, which may be due to that the connection state between the DC input terminal and the component controller is an open-circuit state. Therefore, it may be determined that the connection state between the DC input terminal and the component controller is an open-circuit state.

In some embodiments, the electrical parameter includes a load at the DC input terminal. The regulating an electrical parameter of the DC input terminal includes: reducing the load of the DC input terminal by performing short-circuit scanning in a case that the power conversion device operates in an off-grid state. The determining a connection state between the DC input terminal and the component controller connected to the DC input terminal based on a change of a component output current of a component output terminal and/or a change of a component output voltage of the component output terminal connected to the DC input terminal after the electrical parameter of the DC input terminal is regulated includes: determining that the connection state between the DC input terminal and the component controller connected to the DC input terminal is a normal connected state in a case that the component output current increases corresponding to reducing the load of the DC input terminal and/or the component output voltage decreases corresponding to reducing the load of the DC input terminal, in a time period after reducing the load of the DC input terminal by performing short-circuit scanning; and determining that the connection state between the DC input terminal and the component controller connected to the DC input terminal is an open-circuit state in a case that the component output current does not increase corresponding to reducing the load of the DC input terminal and/or the component output voltage does not decrease corresponding to reducing the load of the DC input terminal, in a time period after reducing the load of the DC input terminal by performing short-circuit scanning.

In the embodiment, the electrical parameter includes a load of the DC input terminal. In a case that the power conversion device operates in the off-grid state, the control module may regulate the load of the DC input terminal by performing short-circuit scanning, which is equivalent to applying a disturbance to the DC input terminal in some embodiments.

In the embodiment, the control module short circuits the DC input terminal by performing short-circuit scanning to reduce the load of the DC input terminal, detects the component output terminal of the component controller after the load is reduced, and then determines the connection state between the component controller and the DC input terminal.

In the embodiment, the time period is a time window for detecting the component output terminal of the component controller. The time period may be configured based on experience or in other ways, which is not limited herein.

In the embodiment, in a case that the component output current of the component output terminal increases corresponding to reducing the load of the DC input terminal, it indicates that the reduced load of the DC input terminal affects the load of the component output terminal and causes an increase in the component output current of the component output terminal. Therefore, in the case that the component output current increases corresponding to reducing the load of the DC input terminal, it may be determined that the connection state between the component controller and the DC input terminal of the power conversion device is a normal connected state. Accordingly, in a case that the component output current does not increase corresponding to reducing the load of the DC input terminal, it may be determined that the connection state between the component controller and the DC input terminal of the power conversion device is an open-circuit state.

Referring to FIG. 7, FIG. 7 shows a relationship between a component output current of the component controller and an input terminal voltage of the DC input terminal after performing short-circuit scanning on the DC input terminal in a case that the connection state of the component controller and the DC input terminal is the normal connected state. Short-circuit scanning is performed on the DC input terminal in a time period from t₁ to t₂. Since the connection state of the component controller and the DC input terminal is the normal connected state, the input terminal voltage decreases, and the component output current increases.

In some embodiments, to accurately determine whether the increase of the current of the component output terminal is caused by performing short-circuit scanning on the DC input terminal of the power conversion device, the control module of the power conversion device or the control unit of the component controller may perform determination by comparing a rate at which the component output current of the component output terminal increases with a rate at which the load of the DC input terminal is reduced by performing the short-circuit scanning, or by comparing a duration of the increase of the component output current with a duration of performing the short-circuit scanning, or based on an increase amplitude of t the component output current, or in other manners, which is not limited herein.

In the embodiment, in a case that the component output voltage of the component output terminal decreases corresponding to reducing the load of the DC input terminal, it indicates that the reduction of the load of the DC input terminal affects the load of the component output terminal and causes the decrease of the component output voltage of the component output terminal. In a case that the component output current decreases corresponding to reducing the load of the DC input terminal, it may be determined that the connection state between the component controller and the DC input terminal of the power conversion device is a normal connected state. In a case that the component output current does not decrease corresponding to reducing the load of the DC input terminal, it may be determined that the connection state between the component controller and the DC input terminal of the power conversion device is an open-circuit state.

In some embodiments, to accurately determine whether the decrease of the voltage of the component output terminal is caused by performing short-circuit scanning on the DC input terminal of the power conversion device, the control module of the power conversion device or the control unit of the component controller may perform determination by determining whether the component output voltage of the component controller is reduced to 0V, or by comparing a duration of the decrease of the component output voltage with a duration of performing the short-circuit scanning, or in other manners, which is not limited herein.

In some embodiments, the electrical parameter includes an input terminal voltage of the DC input terminal. The regulating an electrical parameter of the DC input terminal includes: regulating the input terminal voltage of the DC input terminal by performing IV scanning in a case that the power conversion device operates in an on-grid state. The determining a connection state between the DC input terminal and the component controller connected to the DC input terminal based on a change of a component output current of a component output terminal and/or a change of a component output voltage of the component output terminal connected to the DC input terminal after the electrical parameter of the DC input terminal is regulated includes: determining that the connection state between the DC input terminal and the component controller connected to the DC input terminal is a normal connected state in a case that the component output current changes corresponding to regulating the input terminal voltage of the DC input terminal and/or the component output voltage changes corresponding to regulating the input terminal voltage of the DC input terminal, in a time period after regulating the input terminal voltage of the DC input terminal by performing IV scanning; and determining that the connection state between the DC input terminal and the component controller connected to the DC input terminal is an open-circuit state in a case that the component output current does not change corresponding to regulating the input terminal voltage of the DC input terminal and/or the component output voltage does not change corresponding to regulating the input terminal voltage of the DC input terminal, in a time period after regulating the input terminal voltage of the DC input terminal by performing IV scanning.

In the embodiment, the electrical parameter includes an input terminal voltage of the DC input terminal. In a case that the power conversion device operates in the on-grid state, the control module may regulate the voltage of the DC input terminal by performing IV scanning (current-voltage scanning), which is equivalent to applying a disturbance to the DC input terminal in some embodiments.

In the embodiment, the control module performs IV scanning to regulate the voltage of the DC input terminal, detects the component output terminal of the component controller after the voltage is regulated, and then determines the connection state between the component controller and the DC input terminal.

In the embodiment, in a case that the component output current changes corresponding to regulating the input terminal voltage of the DC input terminal, it indicates that the regulated input terminal voltage of the DC input terminal affects the component output terminal and causes a change in the component output current of the component output terminal. Therefore, in the case that the component output current changes corresponding to regulating the input terminal voltage of the DC input terminal, it indicates that the connection state between the component controller and the DC input terminal of the power conversion device is a normal connected state. In a case that the component output current does not change corresponding to regulating the input terminal voltage of the DC input terminal, it indicates that the connection state between the component controller and the DC input terminal of the power conversion device is an open-circuit state.

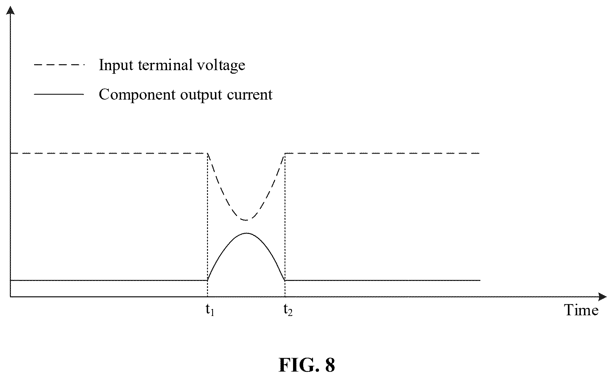

Referring to FIG. 8, FIG. 8 shows a relationship between a component output current of the component controller and an input terminal voltage of the DC input terminal after performing IV scanning on the DC input terminal in a case that the connection state of the component controller and the DC input terminal is the normal connected state. IV scanning is performed on the DC input terminal in a time period from t₁ to t₂. Since the connection state of the component controller and the DC input terminal is the normal connected state, the input terminal voltage decreases gradually, and the component output current increases with the decrease of the input terminal voltage.

In some embodiments, to accurately determine whether the change in the component output current is caused by performing IV scanning on the DC input terminal, the control module of the power conversion device or the control unit of the component controller may perform determination by comparing a rate at which the component output current changes with a rate at which the input terminal current of the DC input terminal changes, or by comparing a duration from the component output current starts to change to the component output current restores to an initial current value with a duration of performing the IV scanning, or in other manners, which is not limited herein.

In the embodiment, in a case that the component output voltage changes corresponding to regulating the input terminal voltage of the DC input terminal, it indicates that the regulated input terminal voltage of the DC input terminal affects the component output terminal and causes the change in the component output voltage of the component output terminal. In the case that the component output voltage changes corresponding to regulating the input terminal voltage of the DC input terminal, it indicates that the connection state between the component controller and the DC input terminal of the power conversion device is a normal connected state. In a case that the component output current does not change corresponding to regulating the input terminal voltage of the DC input terminal, it indicates that the connection state between the component controller and the DC input terminal of the power conversion device is an open-circuit state.

In some embodiments, to accurately determine whether the change in the component output voltage is caused by performing IV scanning on the DC input terminal, the control module of the power conversion device or the control unit of the component controller may perform determination by comparing a rate at which the component output voltage changes with a rate at which the input terminal voltage of the DC input terminal changes, or by comparing a duration from the component output voltage starts to change to the component output voltage restores to an initial voltage value with a duration of performing the IV scanning, or in other manners, which is not limited herein.

In some embodiments, the control module is further configured to regulate the electrical parameter of the DC input terminal after an output voltage of the photovoltaic component reaches a target voltage value.

In some cases, the output voltage of the photovoltaic component is small, the load of the DC input terminal is reduced by performing short-circuit scanning, and the decrease of the voltage or the increase of the current of the component output terminal of the component controller caused by performing short-circuit scanning may not be significant due to the small output voltage of the photovoltaic component, even if the connection state of the component controller and the DC input terminal is the normal connected state. Thus, it may be difficult to determine whether the component controller and the DC input terminal are open circuited. Similarly, in the case that the input terminal voltage of the DC input terminal is regulated by performing IV scanning and the connection state of the component controller and the DC input terminal is the normal connected state, the change of the voltage or the change of the current of the component output terminal of the component controller caused by performing the IV scanning may not be significant, increasing the difficulty of determining whether the component controller and the DC input terminal are open circuited. Therefore, in the embodiment, the control module may regulate the electrical parameter of the DC input terminal by performing short-circuit scanning or IV scanning after the output voltage of the photovoltaic component reaches a target voltage value, thereby easily detecting the change of the voltage or the change of the current of the component output terminal.

In the embodiment, the target voltage value may be preconfigured, or the target voltage value may be a voltage value in a predetermined range, which is not limited herein.

In some embodiments, the control module is further configured to, before regulating the electrical parameter of the DC input terminal, transmit a current limiting instruction to the component controller. The current limiting instruction is used for controlling the component output current of the component controller to be less than or equal to a safe output current and/or a component input current of the component controller to be less than or equal to a safe input current.

In the embodiment, the voltage limiting instruction is used for indicating an upper limit of the current of the component controller. In an embodiment, the voltage limiting instruction may be used for limiting a component input terminal current of the component controller, a component output terminal current of the component controller, or an internal current of the component controller, which is not limited herein.

In some embodiments, multiple DC input terminals are arranged, and the multiple DC input terminals are configured to be connected to different photovoltaic components through different component controllers. The electrical parameter of the DC input terminal is regulated by: regulating electrical parameters of at least a part of the multiple DC input terminals, where the at least a part of the multiple DC input terminals serve as target DC input terminals. The connection state between the DC input terminal and the component controller is determined based on the change of the component output current of the component output terminal of the component controller and/or the change of the component output voltage of the component output terminal of the component controller after the electrical parameter of the DC input terminal is regulated by: determining connection states between the target DC input terminals and component controllers corresponding to the target DC input terminals based on changes of component output currents of component output terminals connected to the target DC input terminals and/or changes of component output voltages of the component output terminals connected to the target DC input terminals after the electrical parameters of the target DC input terminals are regulated.

In the embodiment, the target DC input terminals are DC input terminals of which the electrical parameters are regulated. The control module regulates the electrical parameters of the target DC input terminals, and determines the connection states between the target DC input terminals and the component controllers connected to the target DC input terminals based on current changes or voltage changes of the component output terminals of the component controllers connected to the target DC input terminals.

A method for determining a connection state of a power conversion device is provided according to the present disclosure. The power conversion device includes a DC input terminal. The DC input terminal is connected to a photovoltaic component through a component controller. The method for determining a connection state of a power conversion device includes: regulating an electrical parameter of the DC input terminal; and determining a connection state between the DC input terminal and the component controller connected to the DC input terminal based on a change of a component output current of a component output terminal and/or a change of a component output voltage of the component output terminal connected to the DC input terminal after the electrical parameter of the DC input terminal is regulated.

In some embodiments, the electrical parameter includes a load of the DC input terminal. The regulating an electrical parameter of the DC input terminal includes: reducing the load of the DC input terminal by performing short-circuit scanning in a case that the power conversion device operates in an off-grid state. The determining a connection state between the DC input terminal and the component controller connected to the DC input terminal based on a change of a component output current of a component output terminal and/or a change of a component output voltage of the component output terminal connected to the DC input terminal after the electrical parameter of the DC input terminal is regulated includes: determining that the connection state between the DC input terminal and the component controller connected to the DC input terminal is a normal connected state in a case that the component output current increases corresponding to reducing the load of the DC input terminal and/or the component output voltage decreases corresponding to reducing the load of the DC input terminal, in a time period after reducing the load of the DC input terminal by performing short-circuit scanning; and determining that the connection state between the DC input terminal and the component controller connected to the DC input terminal is an open-circuit state in a case that the component output current does not increase corresponding to reducing the load of the DC input terminal and/or the component output voltage does not decrease corresponding to reducing the load of the DC input terminal, in a time period after reducing the load of the DC input terminal by performing short-circuit scanning.

In some embodiments, the electrical parameter includes an input terminal voltage of the DC input terminal. The regulating an electrical parameter of the DC input terminal includes: regulating the input terminal voltage of the DC input terminal by performing IV scanning in a case that the power conversion device operates in an on-grid state. The determining a connection state between the DC input terminal and the component controller connected to the DC input terminal based on a change of a component output current of a component output terminal and/or a change of a component output voltage of the component output terminal connected to the DC input terminal after the electrical parameter of the DC input terminal is regulated includes: determining that the connection state between the DC input terminal and the component controller connected to the DC input terminal is a normal connected state in a case that the component output current changes corresponding to regulating the input terminal voltage of the DC input terminal and/or the component output voltage changes corresponding to regulating the input terminal voltage of the DC input terminal, in a time period after regulating the input terminal voltage of the DC input terminal by performing IV scanning; and determining that the connection state between the DC input terminal and the component controller connected to the DC input terminal is an open-circuit state in a case that the component output current does not change corresponding to regulating the input terminal voltage of the DC input terminal and/or the component output voltage does not change corresponding to regulating the input terminal voltage of the DC input terminal, in a time period after regulating the input terminal voltage of the DC input terminal by performing IV scanning.

In some embodiments, the method for determining a connection state of a power conversion device further includes: regulating the electrical parameter of the DC input terminal after an output voltage of the photovoltaic component reaches a target voltage value.

In some embodiments, the method for determining a connection state of a power conversion device further includes: transmitting a current limiting instruction to the component controller before regulating the electrical parameter of the DC input terminal. The current limiting instruction is used for controlling the component output current of the component controller to be less than or equal to a safe output current and/or a component input current of the component controller to be less than or equal to a safe input current.

In some embodiments, the regulating an electrical parameter of the DC input terminal includes: regulating electrical parameters of at least a part of multiple DC input terminals, where the at least a part of the multiple DC input terminals serve as target DC input terminals. The determining a connection state between the DC input terminal and the component controller connected to the DC input terminal based on a change of a component output current of a component output terminal and/or a change of a component output voltage of the component output terminal connected to the DC input terminal after the electrical parameter of the DC input terminal is regulated includes: determining connection states between the target DC input terminals and component controllers corresponding to the target DC input terminals based on changes of component output currents of component output terminals connected to the target DC input terminals and/or changes of component output voltages of the component output terminals connected to the target DC input terminals after the electrical parameters of the target DC input terminals are regulated.

For the descriptions of the method for determining a connection state of a power conversion device, one may refer to other embodiments in the present disclosure, which are not repeated herein.

A component controller is provided according to the present disclosure. The component controller includes: a component input terminal, a component output terminal and a control unit. The component input terminal is configured to be connected to a photovoltaic component. The component output terminal is configured to be connected to a DC input terminal of a power conversion device. The control unit is configured to monitor an electrical parameter of the component output terminal in response to the power conversion device regulating an electrical parameter of the DC input terminal, and determine a connection state between the DC input terminal and the component controller connected to the DC input terminal based on a change of a component output current of the component output terminal and/or a change of a component output voltage of the component output terminal.

In an embodiment, the component input terminal is an interface for connecting to the photovoltaic component, and is configured to receive a DC power generated by the photovoltaic component.

In the embodiment, the component output terminal is an interface for connecting to the DC input terminal of the power conversion device. In an embodiment, the component output terminal is configured to transfer regulated DC power to the power conversion device for subsequent power conversion and utilization.

In the embodiment, the electrical parameter of the component output terminal includes a component output voltage or a component output current of the component output terminal. In some embodiments, the electrical parameter of the component output terminal further includes a load of the component output terminal, which is not limited herein.

In the embodiment, the control unit is a control element arranged in the component controller. The control unit may be configured to control an operation state of the component controller, and detect electrical parameters, such as voltages or currents, of the component input terminal and the component output terminal of the component controller.

In the embodiment, based on a monitored electrical parameter of the component output terminal, the component controller may determine that the connection state between the DC input terminal and the component controller connected to the DC input terminal is a normal connected state in a case of determining that a voltage change of the component output voltage matches the regulated electrical parameter of the DC input terminal, or the component controller may determine that the connection state between the DC input terminal and the component controller connected to the DC input terminal is an open-circuit state in a case of determining that the voltage change of the component output voltage does not match the regulated electrical parameter of the DC input terminal.

Alternatively, the component controller may determine that the connection state between the DC input terminal and the component controller connected to the DC input terminal is a normal connected state in a case of determining that the change of the component output current matches the regulated the electrical parameter of the DC input terminal, or the component controller may determine that the connection state between the DC input terminal and the component controller connected to the DC input terminal is an open-circuit state in a case of determining that the change of the component output current does not match the regulated the electrical parameter of the DC input terminal.

Apparently, the component controller may determine that the connection state between the DC input terminal and the component controller connected to the DC input terminal is a normal connected state in a case of determining that the change of the component output voltage matches the regulated electrical parameter of the DC input terminal and the change of the component output current matches the regulated electrical parameter of the DC input terminal, or the component controller may determine that the connection state between the DC input terminal and the component controller connected to the DC input terminal is an open-circuit state in a case of determining that the change of the component output voltage does not match the regulated electrical parameter of the DC input terminal or the change of the component output current does not match the regulated electrical parameter of the DC input terminal.

In some embodiments, the component controller may transmit a determination result of the connection state based on the electrical parameter of the component output terminal to the power conversion device.

In some embodiments, the electrical parameter includes a load of the DC input terminal. The in response to the power conversion device regulating an electrical parameter of the DC input terminal includes: in response to the power conversion device, operating in an off-grid state, reducing the load of the DC input terminal by performing short-circuit scanning. The connection state between the DC input terminal and the component controller connected to the DC input terminal is determined based on the change of the component output current of the component output terminal and/or the change of the component output voltage of the component output terminal by: determining that the connection state between the DC input terminal and the component controller connected to the DC input terminal is a normal connected state in a case that the component output current increases corresponding to reducing the load of the DC input terminal and/or the component output voltage decreases corresponding to reducing the load of the DC input terminal, in a time period after the power conversion device reducing the load of the DC input terminal by performing short-circuit scanning; and determining that the connection state between the DC input terminal and the component controller connected to the DC input terminal is an open-circuit state in a case that the component output current does not increase corresponding to reducing the load of the DC input terminal and/or the component output voltage does not decrease corresponding to reducing the load of the DC input terminal, in a time period after the power conversion device reducing the load of the DC input terminal by performing short-circuit scanning.

In some embodiments, the electrical parameter includes an input terminal voltage of the DC input terminal. The in response to the power conversion device regulating an electrical parameter of the DC input terminal includes: in response to the power conversion device, operating in an on-grid state, regulating the input terminal voltage of the DC input terminal by performing IV scanning. The connection state between the DC input terminal and the component controller connected to the DC input terminal is determined based on the change of the component output current of the component output terminal and/or the change of the component output voltage of the component output terminal by: determining that the connection state between the DC input terminal and the component controller connected to the DC input terminal is a normal connected state in a case that the component output current changes corresponding to regulating the input terminal voltage of the DC input terminal and/or the component output voltage changes corresponding to regulating the input terminal voltage of the DC input terminal, in a time period after the power conversion device regulating the input terminal voltage of the DC input terminal by performing IV scanning; and determining that the connection state between the DC input terminal and the component controller connected to the DC input terminal is an open-circuit state in a case that the component output current does not change corresponding to regulating the input terminal voltage of the DC input terminal and/or the component output voltage does not change corresponding to regulating the input terminal voltage of the DC input terminal, in a time period after the power conversion device regulating the input terminal voltage of the DC input terminal by performing IV scanning.

In some embodiments, the power conversion device regulates the electrical parameter of the DC input terminal after an output voltage of the photovoltaic component reaches a target voltage value.

In some embodiments, the control unit is further configured to receive a current limiting instruction transmitted by the power conversion device before regulating the electrical parameter of the DC input terminal, and perform an operation in response to the current limiting instruction to control the component output current of the component output terminal to be less than or equal to a safe output current and/or a component input current of the component controller to be less than or equal to a safe input current.

For descriptions of component controller embodiments, one may refer to other embodiments in the present disclosure, which are not limited herein.

A method for controlling a component controller is provided according to the present disclosure. The component controller includes a component input terminal and a component output terminal. The component input terminal is connected to a photovoltaic component. The component output terminal is connected to a DC input terminal of a power conversion device. The method for controlling a component controller includes: monitoring an electrical parameter of the component output terminal in response to the power conversion device regulating an electrical parameter of the DC input terminal; and determining a connection state between the DC input terminal and the component controller connected to the DC input terminal based on a change of a component output current of the component output terminal and/or a change of a component output voltage of the component output terminal.

In some embodiments, the electrical parameter of the DC input terminal includes a load of the DC input terminal. The in response to the power conversion device regulating an electrical parameter of the DC input terminal includes: in response to the power conversion device, operating in an off-grid state, reducing the load of the DC input terminal by performing short-circuit scanning. The determining a connection state between the DC input terminal and the component controller connected to the DC input terminal based on a change of a component output current of the component output terminal and/or a change of a component output voltage of the component output terminal includes: determining that the connection state between the DC input terminal and the component controller connected to the DC input terminal is a normal connected state in a case that the component output current increases corresponding to reducing the load of the DC input terminal and/or the component output voltage decreases corresponding to reducing the load of the DC input terminal, in a time period after the power conversion device reducing the load of the DC input terminal by performing short-circuit scanning; and determining that the connection state between the DC input terminal and the component controller connected to the DC input terminal is an open-circuit state in a case that the component output current does not increase corresponding to reducing the load of the DC input terminal and/or the component output voltage does not decrease corresponding to reducing the load of the DC input terminal, in a time period after the power conversion device reducing the load of the DC input terminal by performing short-circuit scanning.

In some embodiments, the electrical parameter of the DC input terminal includes an input terminal voltage of the DC input terminal. The in response to the power conversion device regulating an electrical parameter of the DC input terminal includes: in response to the power conversion device, operating in an on-grid state, regulating the input terminal voltage of the DC input terminal by performing IV scanning. The determining a connection state between the DC input terminal and the component controller connected to the DC input terminal based on a change of a component output current of the component output terminal and/or a change of a component output voltage of the component output terminal includes: determining that the connection state between the DC input terminal and the component controller connected to the DC input terminal is a normal connected state in a case that the component output current changes corresponding to regulating the input terminal voltage of the DC input terminal and/or the component output voltage changes corresponding to regulating the input terminal voltage of the DC input terminal, in a time period after the power conversion device regulating the input terminal voltage of the DC input terminal by performing IV scanning; and determining that the connection state between the DC input terminal and the component controller connected to the DC input terminal is an open-circuit state in a case that the component output current does not change corresponding to regulating the input terminal voltage of the DC input terminal and/or the component output voltage does not change corresponding to regulating the input terminal voltage of the DC input terminal, in a time period after the power conversion device regulating the input terminal voltage of the DC input terminal by performing IV scanning.

In some embodiments, the power conversion device regulates the electrical parameter of the DC input terminal after an output voltage of the photovoltaic component reaches a target voltage value.

In some embodiments, the method for controlling a component controller further includes: receiving a current limiting instruction transmitted by the power conversion device before regulating the electrical parameter of the DC input terminal; and performing an operation in response to the current limiting instruction to control the component output current of the component output terminal to be less than or equal to a safe output current and/or a component input current of the component controller to be less than or equal to a safe input current.

For descriptions of the method for controlling a component controller, one may refer to the other embodiments in the present disclosure, which are not repeated herein.

An energy system is further provided according to the present disclosure. The energy system includes the power conversion device according to the embodiments of the present disclosure, or includes the component controller according to the embodiments of the present disclosure.

In an embodiment, the energy system may be a photovoltaic system, a photovoltaic integrated system, or the like, which is not limited herein.

For descriptions of the energy system, one may refer to the other embodiments in the present disclosure, which are not repeated herein.

It may be understood that in the following embodiments, the term "connection" should be understood as "electrical connection", "communication connection", or the like, in a case that the connected circuits, modules, units, and the like may transmit electrical signals or data to each other.

It may be understood that the examples in this specification are only intended to facilitate those skilled in the art well understanding the present disclosure, and not to limit the scope of the present disclosure.

It may be understood that in the embodiments in the present disclosure, the serial numbers of the processes do not indicate any execution order. The execution order of the processes should be determined based on the functions and internal logic of the processes. The serial numbers of the processes do not limit the implementation of the present disclosure.

It may be understood that the embodiments described in this specification may be implemented individually or in combination, which is not limited in the present disclosure.

Unless otherwise defined, all technical and scientific terms used in the present disclosure have the same meanings as commonly understood by those skilled in the art. The terms used in the present disclosure are only intended to describe the embodiments and are not intended to limit the scope of the present disclosure. The term "and/or" as used in the present disclosure includes any and all combinations of one or more related listed items. The singular forms "a", "the above" and "the" used in this specification and the appended claims, are intended to include the plural forms, unless the context clearly dictates otherwise.

Those skills in the art may understand that the units and algorithm steps described in the embodiments of the present disclosure may be implemented by electronic hardware or a combination of computer software and electronic hardware. Whether a function is to be implemented by hardware or software depends on the application of the technical solution and the design constraints. Those skilled in the art may implement the functions through different methods for each application, and the implementation should not be considered beyond the scope of the present disclosure.

Those skilled in the art may clearly understand that, for convenience and simplicity of descriptions, the operation processes of the above systems, devices and units may refer to the corresponding processes in the method embodiments, and are not repeated herein.

It should be understood that in the embodiments of the present disclosure, the system, device and method may be implemented in other ways. For example, the device embodiments described above are only illustrative. For example, the division of the units is only a logical functional division, and there may be other division manners in actual implementations. For example, multiple units or components may be combined or integrated in another system, or some features may be omitted or not implemented. In addition, the coupling or direct coupling or communication connection shown or discussed may be indirect coupling or communication connection through some interfaces, and the indirect coupling or communication connection of devices or units may be in electrical, mechanical, or other forms

The units described as separate components may or may not be physically separated. Components shown as units may or may not be physical units, that is, the components may be located at a same position or distributed over multiple network units. Some or all of the units may be adopted according to actual requirements to perform the solutions in the embodiments of the present disclosure.

Described above are only some specific embodiments of the present disclosure, and do not limit the protection scope of the present disclosure. Modifications or alternations that may be easily obtained by those skilled with the art within the technical scope of the present disclosure should fall within the protection scope of the present disclosure. Therefore, the protection scope of the present disclosure is in accordance with the protection scope of the claims.

## Claims

1. A power conversion device, **characterized in that** the power conversion device comprises:
a direct-current (DC) input terminal, configured to be connected to a photovoltaic component through a component controller; and
a control module, configured to transmit a voltage regulation instruction to the component controller, monitor an input terminal voltage of the DC input terminal connected to the component controller, compare a measured voltage change of the input terminal voltage with a predetermined voltage change strategy, and determine a connection state between the DC input terminal and the component controller based on a comparison result, wherein the voltage regulation instruction is used for indicating the component controller to regulate an output voltage based on the predetermined voltage change strategy.

2. The power conversion device according to claim 1, wherein the connection state between the DC input terminal and the component controller is determined based on the comparison result by:
determining that the connection state between the DC input terminal and the component controller is an open-circuit state in a case that the measured voltage change of the input terminal voltage of the DC input terminal does not match the predetermined voltage change strategy.

3. The power conversion device according to claim 2, wherein
s component controller and s photovoltaic component connected to the component controller form a photovoltaic module; and a plurality of photovoltaic modules connected in series form a photovoltaic string; and
in a case that the DC input terminal is configured to be connected to the photovoltaic string, the open-circuit state comprises a state in which the component controller that is in the photovoltaic string and is configured to be directly connected to the DC input terminal is open circuited with the DC input terminal, and/or a state in which two component controllers connected in series in the photovoltaic string are open circuited.

4. The power conversion device according to claim 1, wherein
a component controller and a photovoltaic component connected to the component controller form a photovoltaic module; a plurality of photovoltaic modules connected in series form a photovoltaic string; the DC input terminal comprises a first DC input terminal for connecting to a photovoltaic unit; and the photovoltaic unit comprises a photovoltaic module or a photovoltaic string; and
the connection state between the DC input terminal and the component controller is determined based on the comparison result by: determining that a connection state between the first DC input terminal and a component controller in the photovoltaic unit connected to the first DC input terminal is a normal connected state in a case that a measured voltage change of an input terminal voltage of the first DC input terminal matches the predetermined voltage change strategy.

5. The power conversion device according to claim 1, wherein
a component controller and a photovoltaic component connected to the component controller form a photovoltaic module; a plurality of photovoltaic modules connected in series form a photovoltaic string; the DC input terminal comprises a second DC input terminal for connecting to a plurality of photovoltaic units connected in parallel; and each of the plurality of photovoltaic units comprises a photovoltaic module or a photovoltaic string; and
the connection state between the DC input terminal and the component controller is determined based on the comparison result by:
connecting the power conversion device to a power grid and detecting an DC input current of the second DC input terminal in a case that a measured voltage change of an input terminal voltage of the second DC input terminal matches the predetermined voltage change strategy;
determining that each of connection states between the second DC input terminal and component controllers in the plurality of photovoltaic units connected to the second DC input terminal is a normal connected state in a case that the DC input current is greater than a predetermined threshold; and
determining that each of connection states between the second DC input terminal and component controllers in a part of the plurality of photovoltaic units connected to the second DC input terminal is an open-circuit state in a case that the DC input current is less than the predetermined threshold.

6. The power conversion device according to claim 1, wherein
the predetermined voltage change strategy indicates increasing a component output voltage of the component controller step-by-step; and
the voltage regulation instruction is used for indicating the component controller to operate based on a plurality of predetermined sequentially-increasing duty cycles to increase the component output voltage of the component controller step-by-step.

7. The power conversion device according to claim 1, wherein the control module is further configured to, before transmitting the voltage regulation instruction to the component controller, transmit a voltage limiting instruction to the component controller, wherein the voltage limiting instruction is used for controlling a component output voltage of the component controller to be less than or equal to a safe output voltage.

8. The power conversion device according to any one of claims 1 to 7, wherein
a plurality of DC input terminals are arranged; and the plurality of DC input terminals are configured to be connected to different photovoltaic components through different component controllers;
the voltage regulation instruction is transmitted to the component controller and the input terminal voltage of the DC input terminal connected to the component controller is monitored by: transmitting the voltage regulation instruction to at least a part of the plurality of component controllers, wherein the part of the plurality of component controllers to which the voltage regulation instruction is transmitted serve as target component controllers; and monitoring input terminal voltages of DC input terminals connected to the target component controllers; and
the measured voltage change of the input terminal voltage is compared with the predetermined voltage change strategy and the connection state between the DC input terminal and the component controller is determined based on the comparison result by: comparing measured voltage changes of the DC input terminals connected to the target component controllers with the predetermined voltage change strategy, and determining connection states between the target component controllers and the DC input terminals connected to the target component controllers based on a comparison result.

9. A method for determining a connection state of a power conversion device, wherein the power conversion device comprises a direct-current (DC) input terminal, and the DC input terminal is connected to a photovoltaic component through a component controller, wherein the method is **characterized in**:
transmitting a voltage regulation instruction to the component controller, and monitoring an input terminal voltage of the DC input terminal connected to the component controller, wherein the voltage regulation instruction is used for indicating the component controller to regulate an output voltage based on a predetermined voltage change strategy;
comparing a measured voltage change of the input terminal voltage with the predetermined voltage change strategy; and
determining the connection state between the DC input terminal and the component controller based on a comparison result of the measured voltage change and the predetermined voltage change strategy.

10. A power conversion device, **characterized in that** the power conversion device comprises:
a direct-current (DC) input terminal, configured to be connected to a photovoltaic component through a component controller; and
a control module, configured to regulate an electrical parameter of the DC input terminal, and determine a connection state between the DC input terminal and the component controller based on a change of a component output current of a component output terminal of the component controller and/or a change of a component output voltage of the component output terminal of the component controller after the electrical parameter of the DC input terminal is regulated.

11. The power conversion device according to claim 10, wherein
the electrical parameter comprises a load of the DC input terminal;
the electrical parameter of the DC input terminal is regulated by: reducing the load of the DC input terminal by performing short-circuit scanning in a case that the power conversion device operates in an off-grid state; and
the connection state between the DC input terminal and the component controller is determined based on the change of the component output current of the component output terminal of the component controller and/or the change of the component output voltage of the component output terminal of the component controller after the electrical parameter of the DC input terminal is regulated by:
determining that the connection state between the DC input terminal and the component controller connected to the DC input terminal is a normal connected state in a case that the component output current increases corresponding to reducing the load of the DC input terminal and/or the component output voltage decreases corresponding to reducing the load of the DC input terminal, in a time period after reducing the load of the DC input terminal by performing short-circuit scanning; and
determining that the connection state between the DC input terminal and the component controller connected to the DC input terminal is an open-circuit state in a case that the component output current does not increase corresponding to reducing the load of the DC input terminal and/or the component output voltage does not decrease corresponding to reducing the load of the DC input terminal, in a time period after reducing the load of the DC input terminal by performing short-circuit scanning.

12. The power conversion device according to claim 10, wherein
the electrical parameter comprises an input terminal voltage of the DC input terminal; the electrical parameter of the DC input terminal is regulated by: regulating the input terminal voltage of the DC input terminal by performing IV scanning in a case that the power conversion device operates in an on-grid state; and
the connection state between the DC input terminal and the component controller is determined based on the change of the component output current of the component output terminal of the component controller and/or the change of the component output voltage of the component output terminal of the component controller after the electrical parameter of the DC input terminal is regulated by:
determining that the connection state between the DC input terminal and the component controller connected to the DC input terminal is a normal connected state in a case that the component output current changes corresponding to regulating the input terminal voltage of the DC input terminal and/or the component output voltage changes corresponding to regulating the input terminal voltage of the DC input terminal, in a time period after regulating the input terminal voltage of the DC input terminal by performing IV scanning; and
determining that the connection state between the DC input terminal and the component controller connected to the DC input terminal is an open-circuit state in a case that the component output current does not change corresponding to regulating the input terminal voltage of the DC input terminal and/or the component output voltage does not change corresponding to regulating the input terminal voltage of the DC input terminal, in a time period after regulating the input terminal voltage of the DC input terminal by performing IV scanning.

13. The power conversion device according to any one of claims 10 to 12, wherein the control module is further configured to regulate the electrical parameter of the DC input terminal after an output voltage of the photovoltaic component reaches a target voltage value.

14. The power conversion device according to any one of claims 10 to 12, wherein the control module is further configured to, before regulating the electrical parameter of the DC input terminal, transmit a current limiting instruction to the component controller, wherein the current limiting instruction is used for controlling the component output current of the component controller to be less than or equal to a safe output current and/or a component input current of the component controller to be less than or equal to a safe input current.

15. The power conversion device according to any one of claims 10 to12, wherein
a plurality of DC input terminals are arranged; and the plurality of DC input terminals are configured to be connected to different photovoltaic components through different component controllers;
the electrical parameter of the DC input terminal is regulated by: regulating electrical parameters of at least a part of the plurality of DC input terminals, wherein the at least a part of the plurality of DC input terminals serve as target DC input terminals; and
the connection state between the DC input terminal and the component controller is determined based on the change of the component output current of the component output terminal of the component controller and/or the change of the component output voltage of the component output terminal of the component controller after the electrical parameter of the DC input terminal is regulated by: determining connection states between the target DC input terminals and component controllers corresponding to the target DC input terminals based on changes of component output currents of component output terminals connected to the target DC input terminals and/or changes of component output voltages of the component output terminals connected to the target DC input terminals after the electrical parameters of the target DC input terminals are regulated.
